# EUROPÄISCHE PATENTSCHRIFT

(11) **EP 1 794 986 B1**
(45) Veröffentlichungstag und Bekanntmachung des Hinweises auf die Patenterteilung: **06.08.2014**
(21) Anmeldenummer: 05791968.0
(22) Anmeldetag: 22.09.2005
(51) Int. Cl.: H04W 60/06, H04W 84/18, H04L 29/08

(54) **GESICHERTE AUSFÜHRUNG VON LEAVE-BEFEHLEN WENN EIN TEILNEHMER EIN AD-HOC-KOMMUNIKATIONSNETZWERK VERLÄSST**
SECURE EXECUTION OF LEAVE COMMANDS WHEN A USER LEAVES AN AD HOC COMMUNICATION NETWORK
EXECUTION SECURISEE D'INSTRUCTIONS DE SORTIE LORSQU'UN ABONNE QUITTE UN RESEAU DE COMMUNICATION AD HOC

(30) Priorität: 29.09.2004 DE 102004047370
(43) Veröffentlichungstag der Anmeldung: 13.06.2007
(73) Patentinhaber: Siemens Aktiengesellschaft, 80333 München (DE)
(72) Erfinder: BITTERLICH, Jean-Yves, 81549 München (DE)
(86) Internationale Anmeldenummer: PCT/EP2005/054741
(87) Internationale Veröffentlichungsnummer: WO 2006/034986

(56) Entgegenhaltungen:
- EP-A- 1 187 023
- EP-A- 1 435 743
- US-A1- 2003 097 419
- US-A1- 2004 003 051

## Beschreibung

Die vorliegende Erfindung betrifft ein Verfahren zum Betreiben eines ad-hoc-Kommunikationsnetzwerks mit mehreren Teilnehmern, die untereinander eine spontane Kommunikation ausüben können, durch Ausführen eines oder mehrerer Leave-Befehle, wenn ein Teilnehmer von den mehreren Teilnehmern das ad-hoc-Kommunikationsnetzwerk verlässt. Darüber hinaus betrifft die vorliegende Erfindung eine entsprechende Kommunikationsvorrichtung zum Aufbau eines ad-hoc-Kommunikationsnetzwerks mit anderen Teilnehmern.

Einige ad-hoc-Kommunikationsnetzwerke (kurz ad-hoc-Netzwerke) basieren auf der Vorschrift, dass ein Teilnehmer die anderen Teilnehmer benachrichtigen muss, wenn er das Netzwerk verlässt. Gewöhnlich besteht jedoch das Problem darin, dass der Teilnehmer (bzw. das Gerät) den Zeitpunkt für das Ausscheiden aus dem Netzwerk nicht im Voraus kennt. Oftmals weiß der Teilnehmer, dass er das Netzwerk verlassen will, erst dann, wenn er das Netzwerk bereits verlassen hat. Zu diesem Zeitpunkt ist es dem Teilnehmer jedoch nicht mehr möglich, eine "Goodbye"-Nachricht oder entsprechende Steuerbefehle an das Netzwerk bzw. dessen Teilnehmer zu übermitteln.

Ein Lösungsansatz dieses Problems bestünde darin, die Leistung, die Verbindungsqualität und andere Parameter des Netzwerks zu messen und zu bestimmen, wann die Verbindung abbrechen könnte. Diese Lösung ist jedoch nicht zuverlässig, da die Leistung und Verbindungsqualität stark von der Umgebung abhängt. Sogenannte ad-hoc-Netzwerke, mit denen eine spontane Kommunikation möglich ist, sind nämlich so ausgelegt, dass sie sich dynamisch in Zeit und Raum neu organisieren. Folglich ändert sich ständig die Umgebung, so dass eine diesbezügliche Lösung nicht effizient wäre.

In der EP 1 187 023 A1 ist ein auf Bluethoot basierendes ad-hoc-Netzwerk beschrieben, bei dem unabhängig von der Zuweisung als Master der Teilnehmer mit den höchsten Empfangsfeldstärken al Manager Endgerät ausgewählt wird. Verläßt das Manager Endgerät das Netzwerk, so führt dieses Befehle aus, die in einer Close Down Procedure zusammengefasst sind. Hierbei wird unter anderem das Übertragen von Management-Daten und und -Status auf den zurvor festgelegten Vize-Manager veranlasst.

Die Aufgabe der vorliegenden Erfindung besteht somit darin, eine Vorrichtung und ein Verfahren vorzuschlagen, mit denen der Aufbau von ad-hoc-Kommunikationsnetzwerken problemloser gestaltet werden kann.

Erfindungsgemäß wird diese Aufgabe gelöst durch ein Verfahren zum Betreiben eines ad-hoc-Kommunikationsnetzwerks mit mehreren Teilnehmern, die untereinander eine spontane Kommunikation ausüben können, durch Ausführen eines oder mehrerer Leave-Befehle, wenn ein erster Teilnehmer von den mehreren Teilnehmern das ad-hoc-Kommunikationsnetzwerk verlässt, und Übertragen des oder der mehreren Leave-Befehle oder einen Teil davon von dem ersten Teilnehmer, wenn er dem ad-hoc-Kommunikationsnetzwerk beitritt, auf mindestens einen zweiten der mehreren Teilnehmer, der in das ad-hoc-Kommunikationsnetzwerk bereits eingebunden ist, wobei der mindestens eine zweite Teilnehmer den oder die mehreren Leave-Befehle oder einen Teil davon ausführt, wenn der erste Teilnehmer das ad-hoc-Kommunikationsnetzwerk verlässt.

Darüber hinaus ist erfindungsgemäß vorgesehen eine Kommunikationsvorrichtung zum Aufbau eines ad-hoc-Kommunikationsnetzwerks mit anderen Teilnehmern, mit einer Übertragungseinrichtung zum automatischen Aufbau einer Kommunikation zu mindestens einem der anderen Teilnehmer des ad-hoc-Kommunikationsnetzwerk und einer Speichereinrichtung zum Speichern eines oder mehreren Leave-Befehle, die von den anderen Teilnehmern auszuführen sind, wenn die Kommunikationsvorrichtung als Teilnehmer das ad-hoc-Kommunikationsnetzwerk verlässt, wobei die Kommunikationseinrichtung so gestaltet ist, dass mit der Übertragungseinrichtung der oder die mehreren Leave-Befehle oder ein Teil davon automatisch auf den mindestens einen der anderen Teilnehmer zur Ausführung übertragen wird, wenn die Kommunikationsvorrichtung dem ad-hoc-Kommunikationsnetzwerk als Teilnehmer beitritt.

Erfindungsgemäß ist damit die Möglichkeit geschaffen, dass im Netzwerk noch gewisse Befehle ausgeführt werden, die den verlassenden Teilnehmer betreffen, auch wenn dieser das Netzwerk bereits verlassen hat.

Vorzugsweise sind der oder die Leave-Befehle in einem Leave-Skript nach einem vorgegebenen Standard zusammengefasst. Dadurch können die auszuführenden Befehle leicht übermittelt und abgearbeitet werden.

Das Leave-Skript kann an mehrere Teilnehmer gesandt werden. Dadurch nimmt die Wahrscheinlichkeit zu, dass mindestens noch ein Teilnehmer in dem Netzwerk vorhanden ist, der das Leave-Skript gespeichert hat, wenn der Teilnehmer, von dem das Leave-Skript stammt, das Netzwerk verlassen hat.

Das Leave-Skript kann auch in unterschiedlichen Teilen an verschiedene Teilnehmer gesandt werden. Dadurch kann die Abarbeitung des Leave-Skripts effizient auf entsprechend geeignete Teilnehmer verteilt werden. Darüber hinaus steigt dadurch auch die Wahrscheinlichkeit, dass zumindest Teile des Leave-Skripts abgearbeitet werden, wenn weitere Teilnehmer das Netzwerk verlassen.

Die Leave-Befehle werden günstigerweise dann abgearbeitet, wenn durch die Übertragungseinrichtung festgestellt ist, dass ein Teilnehmer das ad-hoc-Netzwerk verlassen hat. Dies kann beispielsweise dadurch geschehen, dass die Übertragungseinrichtung registriert, dass mit dem einen Teilnehmer keine Kommunikation mehr aufgebaut werden kann.

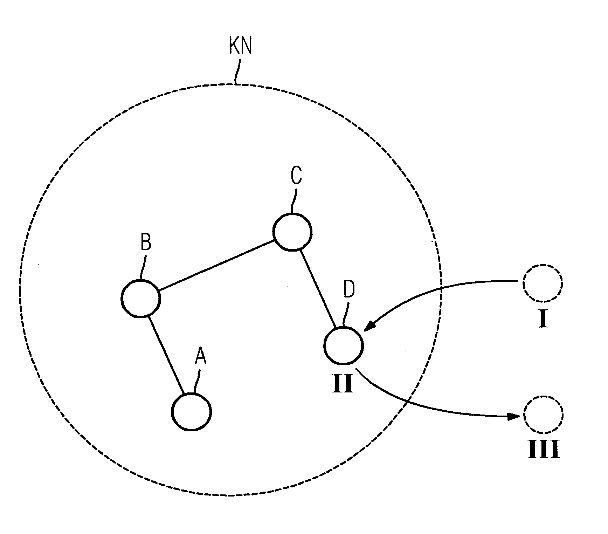

Die vorliegende Erfindung wird nun anhand der beigefügten Zeichnung näher erläutert, die das erfindungsgemäße Verfahren für ein ad-hoc-Netzwerk symbolisch wiedergibt.

Das nachfolgend näher geschilderte Ausführungsbeispiel stellt eine bevorzugte Ausführungsform der vorliegenden Erfindung dar.

Entsprechend der in der FIG dargestellten Skizze besteht ein ad-hoc-Kommunikationsnetz KN zunächst aus den drei Teilnehmern A, B und C. Diese kommunizieren untereinander entweder direkt oder über Multi-Hopping. Für das Routing ist es wichtig, zu wissen, welche Teilnehmer in dem Kommunikationsnetz KN vorhanden sind.

Tritt nun ein neuer Teilnehmer D dem Kommunikationsnetz KN bei, so geschieht dies, indem er die Kommunikation mit einem der Teilnehmer des ad-hoc-Netzwerks KN aufnimmt. Entsprechend der FIG wechselt der Teilnehmer D hierbei von dem Zustand I in den Zustand II. Dabei speichert er ein sogenanntes Execute-On-Leave-Script auf einem oder mehreren Zielgeräten, die bereits im Netzwerk KN als Teilnehmer vorhanden sind. Dieses Skript wird ausgeführt, sobald der Teilnehmer D das Netzwerk KN verlässt und hierbei in den Zustand III wechselt. Die Tatsache, ob der Teilnehmer D das Netzwerk KN verlassen hat, kann beispielsweise dadurch festgestellt werden, dass keiner der noch vorhandenen Teilnehmer des Netzwerks den Teilnehmer D erreichen kann. Dies kann nach einem einmaligen Versuch oder nach mehreren Versuchen gegebenenfalls mit Verzögerung festgestellt werden.

Nachfolgend wird ein typisches Szenario anhand der beigefügten FIG als konkretes Beispiel erläutert, wie dies oben bereits angedeutet ist. In dem ad-hoc-Netzwerk KN sind bereits die Geräte bzw. Teilnehmer A, B und C vorhanden. Alle von ihnen bieten unterschiedliche Serviceleistungen an. Der Teilnehmer D tritt nun dem Netzwerk bei und erfährt, dass der Teilnehmer C eine interessante Serviceleistung zur Verfügung stellt, die Teilnehmer D eventuell nutzen möchte.
Beispielsweise besitzt der Teilnehmer C Beamer-Funktionalität.

Darüber hinaus erhält der Teilnehmer D über eine Multi-Hopping-Verbindung die Information, dass der Teilnehmer B Service-Lautsprecher-Funktionalität bietet.

Der Teilnehmer D stellt nun eine Verbindung zum Teilnehmer C her und sendet an diesen die Instruktionen: "Wenn Teilnehmer D das Netzwerk KN verlässt, sollen die Dias nicht mehr gezeigt werden". Alternativ oder zusätzlich kann Teilnehmer D an den Teilnehmer A die Instruktion senden: "Zeige von nun an eine bestimmte Diashow".

Der Teilnehmer D stellt daraufhin eine Verbindung mit Teilnehmer B her und sendet an diesen die Instruktionen: "Wenn Teilnehmer D das Netzwerk KN verlässt, sollten die Lautsprecher abgeschaltet werden". Alternativ kann der Teilnehmer D direkt oder indirekt an den Teilnehmer B auch die Instruktion senden, "sende eine bestimmte Musik!"

Gegebenenfalls kann auch an den Teilnehmer A ein Execute-On-Leave-Script geschickt werden, das dieser auszuführen hat, wenn Teilnehmer D das Netzwerk KN verlässt.

In der momentanen Konfiguration hat nur der Teilnehmer C direkte Verbindung zu dem Teilnehmer D. Verlässt nun der Teilnehmer D das Netzwerk KN, indem er von Zustand II auf Zustand III wechselt, so kann dies der Teilnehmer C feststellen, da er keine Verbindung mehr zu dem Teilnehmer D hat. Daraufhin startet Teilnehmer C sein Execute-On-Leave-Script und zeigt die Dias nicht mehr. Auch der Teilnehmer B stellt unter Vermittlung von Teilnehmer C fest oder erfährt von Teilnehmer C mittels einer entsprechenden Nachricht, dass der Teilnehmer D das Netzwerk KN verlassen hat. Daraufhin unterbricht er das Spielen von Musik.

Das erfindungsgemäße Prinzip des Speicherns eines Execute-On-Leave-Scripts bei einem Teilnehmer des Netzwerks beim Eintritt eines neuen Netzwerkteilnehmers und des Abarbeitens dieses Scripts beim Austritt dieses Teilnehmers aus dem Netzwerk ist generisch und kann für beliebige Szenarien Anwendung finden. Beispielsweise können Komponenten eines Fahrzeugs mit einem Transponder, den der Fahrer mit sich trägt, ein ad-hoc-Netzwerk bilden. Verlässt nun der Fahrer mit dem Transponder das Fahrzeug, so kann das Fahrzeug automatisch verschlossen, das Radio abgeschaltet und weitere Funktionen ausgeführt werden. Auch lässt sich nach dem erfindungsgemäßen Prinzip ein einfaches Routing durchführen. Ferner bietet das erfindungsgemäße Prinzip eine zuverlässige Lösung zur Ausführung von Befehlen nach dem Verlassen eines Teilnehmers aus einem Kommunikationsnetzwerk unabhängig von der jeweiligen Umgebung. Des Weiteren basiert das erfindungsgemäße Prinzip auf der sogenannten ad-hoc-Middleware, über die in der Regel ohnehin jedes Kommunikationsgerät verfügt.

### Bezugszeichenliste

- A, B, C, D: Teilnehmer
- KN: ad-hoc-Kommunikationsnetz
- I, II, III: Zustände

## Patentansprüche

1. Verfahren zum Betreiben eines ad-hoc-Kommunikationsnetzwerks (KN) mit mehreren Teilnehmern (A bis D), die untereinander eine spontane Kommunikation ausüben können, durch
- Ausführen eines oder mehrerer Leave-Befehle, wenn ein erster Teilnehmer (D) von den mehreren Teilnehmern das ad-hoc-Kommunikationsnetzwerk (KN) verlässt,
**gekennzeichnet durch**
- Übertragen des oder der mehreren Leave-Befehle oder einen Teil davon von dem ersten Teilnehmer (D), wenn er dem ad-hoc-Kommunikationsnetzwerk (KN) beitritt, auf mindestens einen zweiten der mehreren Teilnehmer (C), der in das ad-hoc-Kommunikationsnetzwerk (KN) bereits eingebunden ist, wobei
- der mindestens eine zweite Teilnehmer (C) den oder die mehreren Leave-Befehle oder einen Teil davon ausführt, wenn der erste Teilnehmer (D) das ad-hoc-Kommunikationsnetzwerk verlässt.

2. Verfahren nach Anspruch 1, wobei der oder die Leave-Befehle in einem Leave-Skript zusammengefasst sind.

3. Verfahren nach Anspruch 2, wobei das Leave-Skript mehreren Teilnehmern (A, B, C) zugesandt wird.

4. Verfahren nach Anspruch 2 oder 3, wobei unterschiedliche Teile des Leave-Skripts an verschiedene Teilnehmer (A, B, C) gesandt werden.

5. Verfahren nach einem der vorhergehenden Ansprüche, wobei das Ausscheiden eines Teilnehmers (D) aus dem ad-hoc-Netzwerk anhand der Tatsache festgestellt wird, dass mit dem Teilnehmer (D) keine Kommunikation mehr aufbaubar ist.

6. Kommunikationsvorrichtung zum Aufbau eines ad-hoc-Kommunikationsnetzwerks (KN) mit anderen Teilnehmern, **gekennzeichnet durch**
- eine Übertragungseinrichtung zum automatischen Aufbau einer Kommunikation zu mindestens einem der anderen Teilnehmer (A, B, C) des ad-hoc-Kommunikationsnetzwerks (KN) und
- eine Speichereinrichtung zum Speichern eines oder mehrerer Leave-Befehle, die von den anderen Teilnehmern (A, B, C) auszuführen sind, wenn die Kommunikationsvorrichtung als Teilnehmer (D) das ad-hoc-Kommunikationsnetzwerk (KN) verlässt, wobei die Kommunikationseinrichtung so gestaltet ist, dass
- mit der Übertragungseinrichtung der oder die mehreren Leave-Befehle oder ein Teil davon automatisch auf den mindestens einen der anderen Teilnehmer (A, B, C) zur Ausführung übertragen wird, wenn die Kommunikationsvorrichtung dem ad-hoc-Kommunikationsnetzwerk (KN) als Teilnehmer (D) beitritt.

7. Kommunikationsvorrichtung nach Anspruch 6, derart ausgestaltet, dass die Kommunikationsvorrichtung eine Abarbeitungseinrichtung zum Abarbeiten eines oder mehrerer Leave-Befehle eines anderen Teilnehmers (D), der das ad-hoc-Netzwerk verlassen hat, auf Veranlassen der Übertragungseinrichtung, mit der ein Ausscheiden des Teilnehmers (D) aus dem ad-hoc-Netzwerk (KN) festgestellt wird, umfasst.

8. Kommunikationsvorrichtung nach Anspruch 6 oder 7, wobei der oder die Leave-Befehle in einem Leave-Skript zusammengefasst sind.

9. Kommunikationsvorrichtung nach Anspruch 8, derart ausgestaltet, dass das Leave-Skript mehreren Teilnehmern (A, B, C) zugesendet wird.

10. Kommunikationsvorrichtung nach Anspruch 8 oder 9, derart ausgestaltet, dass unterschiedliche Teile des Leave-Skripts an verschiedene Teilnehmer (A, B, C) zugesendet werden.

11. Kommunikationsvorrichtung nach einem der Ansprüche 6 bis 10, derart ausgestaltet, dass mit der Übertragungseinrichtung das Ausscheiden eines Teilnehmers (D) aus dem ad-hoc-Netzwerk (KN) anhand der Tatsache festgestellt wird, dass mit dem Teilnehmer (D) keine Kommunikation mehr aufbaubar ist.

## Claims

1. Method for operating an ad hoc communication network (KN) comprising a plurality of subscribers (A to D), said subscribers being able to engage in spontaneous communication with one another, by
- execution of one or more leave commands when a first subscriber (D) of the plurality of subscribers leaves the ad hoc communication network (KN),
**characterised by**
- transmission of the leave command or the plurality of leave commands or a subset thereof by the first subscriber (D) when he/it joins the ad hoc communication network (KN) to at least a second of the plurality of subscribers (C) that is already integrated in the ad hoc communication network (KN), wherein
- the at least one second subscriber (C) executing the leave command or the plurality of leave commands or a subset thereof when the first subscriber (D) leaves the ad hoc communication network.

2. Method according to claim 1, wherein the leave command or leave commands are combined in a leave script.

3. Method according to claim 2, wherein the leave script is sent to a plurality of subscribers (A, B, C).

4. Method according to claim 2 or 3, wherein different parts of the leave script are sent to different subscribers (A, B, C).

5. Method according to one of the preceding claims, wherein the departure of a subscriber (D) from the ad hoc network is established on account of the fact that no further communication can be set up to said subscriber (D).

6. Communication device for setting up an ad hoc communication network (KN) with other subscribers,
**characterised by**
- a transmission device for automatically setting up a communication to at least one of the other subscribers (A, B, C) of the ad hoc communication network (KN) and
- a memory device for storing one or more leave commands which are to be executed by the other subscribers (A, B, C) when the communication device, as a subscriber (D), leaves the ad hoc communication network (KN), said communication device being embodied such that
- the leave command or the plurality of leave commands or a subset thereof is automatically transmitted by means of the transmission device to the at least one of the other subscribers (A, B, C) for execution when the communication device joins the ad hoc communication network (KN) as a subscriber (D).

7. Communication device according to claim 6, said device being embodied such that the communication device has a processing device for processing one or more leave commands of another subscriber (D) that has left the ad hoc network, on the instigation of the transmission device by means of which a departure of the subscriber (D) from the ad hoc network (KN) can be established.

8. Communication device according to claim 6 or 7, wherein the leave command or leave commands are combined in a leave script.

9. Communication device according to claim 8, said device being embodied such that the leave script is sent to a plurality of subscribers (A, B, C).

10. Communication device according to claim 8 or 9, said device being embodied such that different parts of the leave script are sent to different subscribers (A, B, C).

11. Communication device according to one of claims 6 to 10, said device being embodied such that the departure of a subscriber (D) from the ad hoc network (KN) can be established by means of the transmission device on account of the fact that no further communication can be set up to said subscriber (D).

## Revendications

1. Procédé d'exploitation d'un réseau de communication ad hoc (KN) avec plusieurs usagers (A à D) qui peuvent avoir une communication spontanée entre eux par
- l'exécution d'un ou de plusieurs ordres « Leave » lorsqu'un premier usager (D) des plusieurs usagers quitte le réseau de communication ad hoc (KN), **caractérisé par**
- la transmission du ou des plusieurs ordres « Leave » ou d'une partie de ceux-ci du premier usager (D), s'il se connecte au réseau de communication ad hoc (KN), à au moins un deuxième des plusieurs usagers (C) qui est déjà intégré au réseau de communication ad hoc (KN),
- l'au moins un deuxième usager (C) exécutant le ou les plusieurs ordres « Leave » ou une partie de ceux-ci lorsque le premier usager (D) quitte le réseau de communication ad hoc.

2. Procédé selon la revendication 1, le ou les ordres « Leave » étant regroupés dans un script « Leave ».

3. Procédé selon la revendication 2, le script « Leave » étant envoyé à plusieurs usagers (A, B, C).

4. Procédé selon la revendication 2 ou 3, différentes parties du script « Leave » étant envoyées à différents usagers (A, B, C).

5. Procédé selon l'une des revendications précédentes, le fait qu'un usager (D) quitte le réseau ad hoc étant constaté par le fait qu'il n'est plus possible d'établir une communication avec l'usager (D).

6. Dispositif de communication pour établir un réseau de communication ad hoc (KN) avec d'autres usagers, **caractérisé par** :
- un dispositif de transmission pour établir automatiquement une communication avec au moins l'un des autres usagers (A, B, C) du réseau de communication ad hoc (KN) et
- un dispositif de mémoire pour stocker un ou plusieurs ordres « Leave » qui doivent être exécutés par les autres usagers (A, B, C) lorsque le dispositif de communication quitte le réseau de communication ad hoc (KN) en tant qu'usager (D), le dispositif de communication étant conçu de manière telle que
- le ou les plusieurs ordres « Leave » ou une partie de ceux-ci sont transmis automatiquement, au moyen du dispositif de transmission, à l'au moins un des autres usagers (A, B, C) pour être exécutés lorsque le dispositif de communication se connecte au réseau de communication ad hoc (KN) en tant qu'usager (D).

7. Dispositif de communication selon la revendication 6, conçu de manière telle que le dispositif de communication comprend un dispositif de traitement pour traiter un ou plusieurs ordres « Leave » d'un autre usager (D) qui a quitté le réseau ad hoc à l'instigation du dispositif de transmission au moyen duquel il est constaté que l'usager (D) quitte le réseau ad hoc (KN).

8. Dispositif de communication selon la revendication 6 ou 7, le ou les ordres « Leave » étant regroupés dans un script « Leave ».

9. Dispositif de communication selon la revendication 8, conçu de manière telle que le script « Leave » est envoyé à plusieurs usagers (A, B, C).

10. Dispositif de communication selon la revendication 8 ou 9, conçu de manière telle que différentes parties du script « Leave » sont envoyées à différents usagers (A, B, C).

11. Dispositif de communication selon l'une des revendications 6 à 10, conçu de manière telle que le fait qu'un usager (D) quitte le réseau ad hoc (KN) est constaté au moyen du dispositif de transmission par le fait qu'il n'est plus possible d'établir une communication avec l'usager (D).
